# EUROPEAN PATENT SPECIFICATION

(11) **EP 1 315 261 B1**
(45) Date of publication and mention of the grant of the patent: **20.08.2008**
(21) Application number: 02025992.5
(22) Date of filing: 21.11.2002
(51) Int. Cl.: H02G 3/06, H02G 3/04

(54) **A joining member for a mesh cable tray**
Verbindungselement für Gitterkabelkanal
Pièce de jonction pour chemin de câble en fils

(30) Priority: 23.11.2001 IT TO20011096
(43) Date of publication of application: 28.05.2003
(73) Proprietor: BTICINO S.P.A., 20154 Milano (IT)
(72) Inventor: Finco, Alan, 15047 Spinetta Marengo, (Alessandria) (IT); Garassino, Luca, 15067 Novi Ligure, (Alessandria) (IT)
(74) Representative: Rondano, Davide

(56) References cited:
- EP-A- 0 930 685
- DE-A- 3 737 187
- FR-A- 2 652 142

## Description

The present invention relates to a joining member for a mesh cable tray, for connecting a first mesh cable tray element to a second, longitudinally adjacent mesh cable tray or cable duct element.

It is known to protect cables, and in particular electric cables, by the use of mesh trays, constituted by a plurality of longitudinal and transverse wires joined together in a mesh, with the transverse wires including a horizontal bottom portion from which two parallel vertical arms extend perpendicular, whereby each transverse wire is generally U-shaped.

Mesh cable trays are manufactured in fixed-length elements, with the opposite ends thereof defined by respective transverse wires, referred to hereinafter as end transverse wires or first transverse wires. In order to connect in series two separate mesh tray elements, they are usually brought together longitudinally until their respective first transverse wires meet and than these wires are coupled by appropriate known retaining means, such as clamps for example.

Since mesh tray elements are obviously not available in whatever length is required, sometimes when installing a tray it is necessary to cut a tray element along an intermediate transverse plane between two consecutive transverse wires, thereby obtaining a segment of tray of the required length. It then becomes necessary to have at one's disposal suitable joining members for connecting segments of mesh tray even on the side where they do not terminate in a transverse wire but in cut longitudinal wires projecting beyond the outermost transverse wire.

A joining member able to meet this requirement is known from the German Patent Application DE-2 930 083, in which a joining member is described which comprises a vertical plate portion extending longitudinally and forming a pair of upper and lower horizontal flaps, arranged on the same side of the said plate portion and each having four recesses provided therein, the recesses being aligned vertically in pairs and adopted to engage the vertical arms of the first two transverse wires of both the tray portions to be connected.

This known arrangement has the disadvantage, however, that since the spacing between the recesses in the joining member is fixed at the time of manufacture, it only enables to connect mesh tray elements the transverse wires of which are spaced by this same distance while, furthermore, it does not enable to vary the longitudinal distance between two tray elements to be connected.

In order to overcome this and other disadvantages of the prior art discussed above, and to provide a simple and versatile arrangement for connecting elements of mesh cable trays, the object of the present invention is a joining member having the characteristics defined in independent Claim 1.

Besides the mesh trays defined above, so-called channel trays are also commonly used for performing the same task of supporting and containing electric cables, the trays comprising a bottom wall and a pair of side walls which extend perpendicular to the bottom wall so as to form a channel.

A further object of the present invention is to provide a joining member for connecting a mesh cable tray element to a longitudinally adjacent channel-like cable duct element.

This further object is fully achieved according to the invention by a joining member having the characteristics defined in independent Claim 2.

The characteristics and advantages of the invention will become apparent from the detailed description which follows, given purely by way of non-limitative example, with reference to the appended drawings, in which:
Figure 1 is a perspective view from below showing the connection of two longitudinally adjacent mesh cable tray elements by means of a joining member according to a first preferred embodiment of the present invention;
Figure 2 is a perspective view from below of the joining member of Figure 1;
Figure 3 is a perspective view from above showing the connection between a mesh tray element and a longitudinally adjacent channel tray element in the form of an angle connector by means of a joining member according to a further preferred embodiment of the present invention;
Figure 4 is a perspective view from above of the joining member of Figure 3; and
Figure 5 is a perspective view of a device for fixing a joining member of the invention to a wire of a mesh tray element.

In the description and the Claims which follow, terms such as "longitudinal", "transverse", "upper" and "lower" are to be understood as referred to the assembled condition.

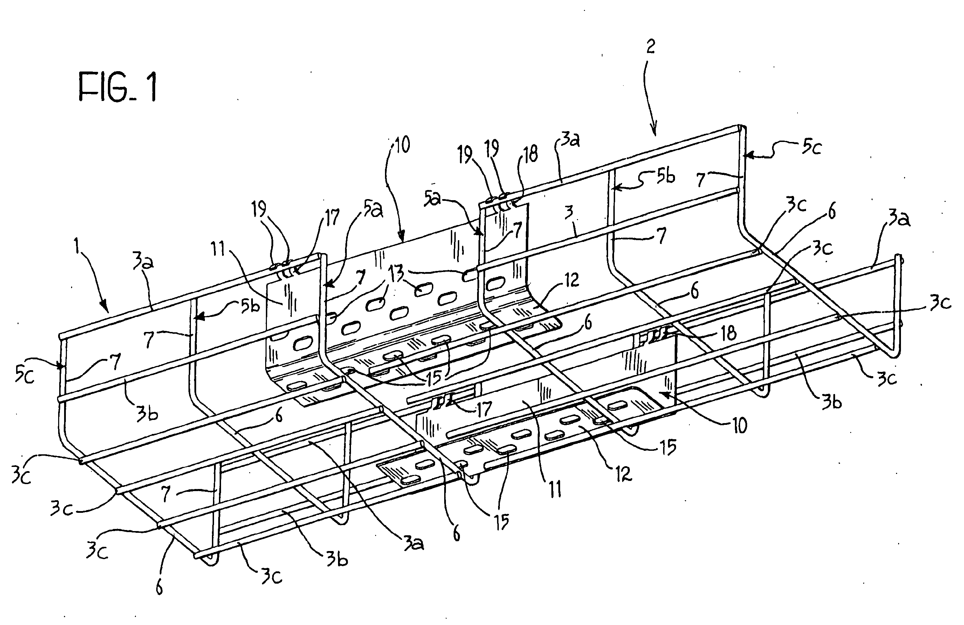

By referring initially to Figure 1, first and second longitudinally adjacent mesh cable tray elements, generally indicated 1 and 2, comprise each a series of longitudinal metal wires 3a, 3b and 3c and a series of transverse metal wires 5a, 5b and 5c. The longitudinal wires 3a, 3b and 3c are connected to the transverse wires 5a, 5b and 5c, by electric welding for example, so as to form a mesh.

The transverse wires 5a, 5b and 5c are numbered in order starting from the longitudinal end of each tray element facing the next element. The reference number 5a thus indicates the end transverse wire, or first transverse wire of each tray element, the number 5b indicates the immediately adjacent, transverse wire, or second transverse wire, and the number 5c indicates the third transverse wire. Each transverse wire 5a, 5b and 5c includes a normally rectilinear bottom portion 6 from which a pair of parallel vertical portions 7 extend perpendicular thereto, whereby each transverse wire is generally U-shaped.

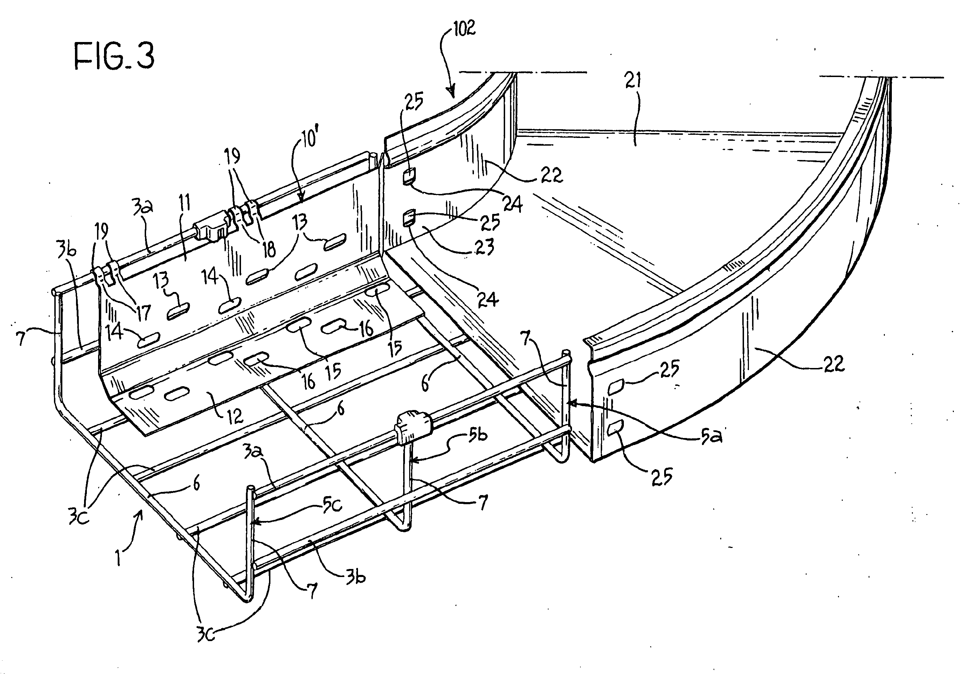

As shown in the example of Figure 1, mesh cable trays generally, though not necessarily, comprise a pair of longitudinal wires 3a and 3b connected to each of the two parallel vertical portions 7 of the transverse wires. In the rest of the description, the longitudinal wires 3a and 3b will be called side longitudinal wires. Of these, the wires 3a connected to the free ends of the arms 7 will be referred to as edge longitudinal wires. The longitudinal wires 3c connected to the bottom portion 6 of the transverse wires will be referred to as bottom longitudinal wires. In the example of Figure 1, as in that of Figure 3, each of the mesh cable tray elements includes four bottom longitudinal wires.

With reference to Figure 1, the longitudinal end of the first mesh tray element 1 facing the second element 2 is defined by the respective first transverse wire 5a. The bottom longitudinal wires 3c of the second element 2, on the other hand, extend beyond the first transverse wire 5a, on the side facing the first element 1, since the element 2 is of course obtained by cutting a longer mesh tray element.

The two mesh tray elements 1 and 2 are connected to each other by a pair of joining members 10 according to a first preferred embodiment of the present invention.

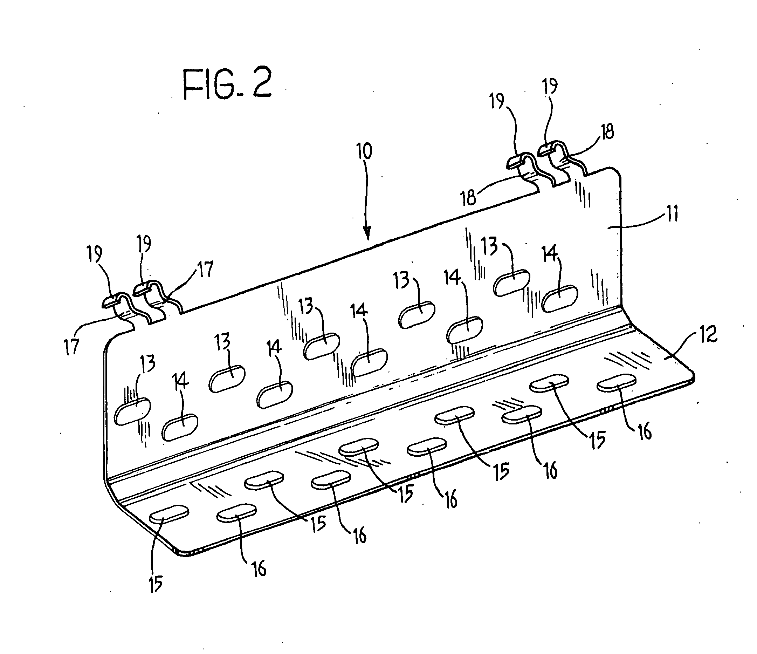

By referring now also to Figure 2, the joining member 10 is a metal sheet element, extending longitudinally and substantially L-shaped in cross section, which comprises a pair of essentially flat perpendicular plate portions 11 and 12, adapted to engage the vertical side portions and the horizontal bottom portion, respectively, of the two mesh tray elements 1 and 2.

In use, the plate portion 11 of each of the two joining members 10 is held (see Figure 1) against the respective vertical arms 7 of at least the first two transverse wires 5a of the two mesh tray elements 1 and 2, on the side facing into the tray.

In the plate portion 11 there are formed a first sequence of apertures 13, advantageously shaped as longitudinal slots, equally spaced along a first longitudinal direction, and a second sequence of apertures 14, advantageously shaped as longitudinal slots, equally spaced and staggered relative to the apertures 13 along a second longitudinal direction spaced vertically from the first.. The apertures 13 and 14 are preferably identical and are spaced by the same distance. The longitudinal size and the spacing of the apertures 13 and 14 are chosen advantageously so that the two sequences of apertures substantially cover the entire length of the plate portion 11.

The plate portion 12 has a transverse size similar to the height of the vertical plate 11 and is preferably formed integrally with this latter. In use, the plate portion 12 is held inside the mesh tray, resting on the bottom portions 6 of at least the first transverse wires 5a of the two tray elements 1 and 2. In the plate portion 12 there are formed a third sequence of apertures 15, advantageously shaped as longitudinal slots equally spaced along a third longitudinal direction, and a fourth sequence of apertures 16, advantageously shaped as longitudinal slots, equally spaced and staggered relative to the apertures 15 along a fourth longitudinal direction, transversely spaced from the third.

The apertures 15 and 16 in the plate portion 12 are preferably identical and spaced by the same distance. The size and the spacing of the apertures 15 and 16 in the plate portion 12 are preferably the same as those of the apertures 13 and 14 in the plate portion 11. In this case, the apertures 15 in the plate 12 are advantageously aligned longitudinally with the apertures 13 in the plate 11, and the apertures 16 in the plate 12 are aligned with the apertures 14 in the plate 11.

Screws (not shown) can be inserted through the apertures 13 and/or 14 of the vertical plate portion 11 for fixing the joining member 10 to the parallel vertical arms 7 of the first transverse wires 5a, and possibly also to the side longitudinal wires 3b, of the two mesh tray elements 1 and 2. In the same way, screws (again not shown) can be inserted through the apertures 15 and/or 16 of the horizontal plate portion 12 for fixing the joining member 10 to the bottom portions 6 of the first transverse wires 5a, and possibly also to one of the bottom longitudinal wires 3c, of the two mesh tray elements 1 and 2.

It is clear that, since the apertures 13 and 14 in the plate portion 11 are aligned with the apertures 15 and 16, respectively, in the plate portion 12, each first transverse wire 5a can be secured to the joining member 10 through one of the apertures 13 and the aperture 15 aligned or one of the apertures 14 and the aperture 16 aligned therewith, depending on which pair of apertures faces that wire.

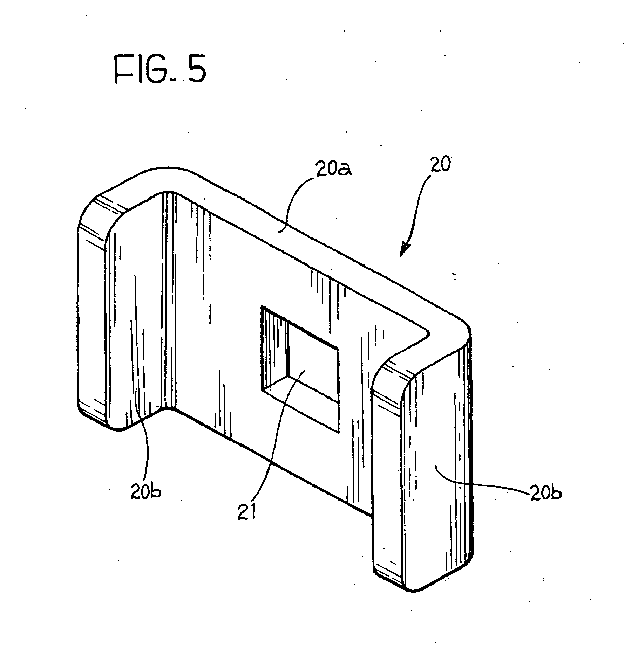

In order to ensure that the joining member 10 is fixed securely and stably to either the longitudinal or the transverse wires of the mesh tray elements 1 and 2, a device 20 (shown in Figure 5) in the form of a shaped plate is provided and is inserted between the wire and the nut or head of the screw (not shown), so as to increase the bearing surface of the nut or screw head on the wire. The device 20 is a metal sheet element comprising a flat central portion 20a with two side portions 20b extending from a pair of opposite edges thereof and bent over relative to the control portion 20a so that the device 20 is substantially C-shaped. A through aperture 21 is formed in the centre of the portion 20a for the shank of the fixing screw to pass through.

In order to fix a tray wire to a plate portion of the joining member 10, the device 20 is rested with its side portions 20b against the outer surface of the plate portion so that it encloses the wire and its central aperture 21 is aligned with one of the apertures 13, 14, or 15, 16 formed in the plate. At this point the screw is inserted, preferably from inside the tray, through the hole in the member 10 and that in the device 20, so that the wire is held between the shank of the screw and one of the side portions of the device 20. Finally a nut is screwed onto the screw, which nut acts on the central portion 20a of the device 20 rather than directly on the wire, thereby clamping the wire between the device 20 and the plate of the joining member 10.

By referring again to Figures 1 and 2, the vertical plate portion 11 of the joining member 10 also includes first and second pairs of projections 17 and 18, extending from the upper edge of the plate, preferably near the longitudinal ends thereof, and spaced longitudinally, for cooperation with the mesh tray elements 1 and 2, respectively. The upper portions of the projections 17 and 18 form hooks 19 for engaging, by snap-engaging for example, the edge longitudinal wires 3a of the elements 1 and 2, thereby enabling the operator assembling the tray to lock the joining member in place without needing to hold it by hand. The operator can thus concentrate on screwing the joining member to the two tray elements, thus saving time and fatigue.

As will become apparent in view of the preceding description, the advantages of a joining member according to this first embodiment of the invention lie mainly in structural simplicity, low production costs, ease of assembly and versatility of use.

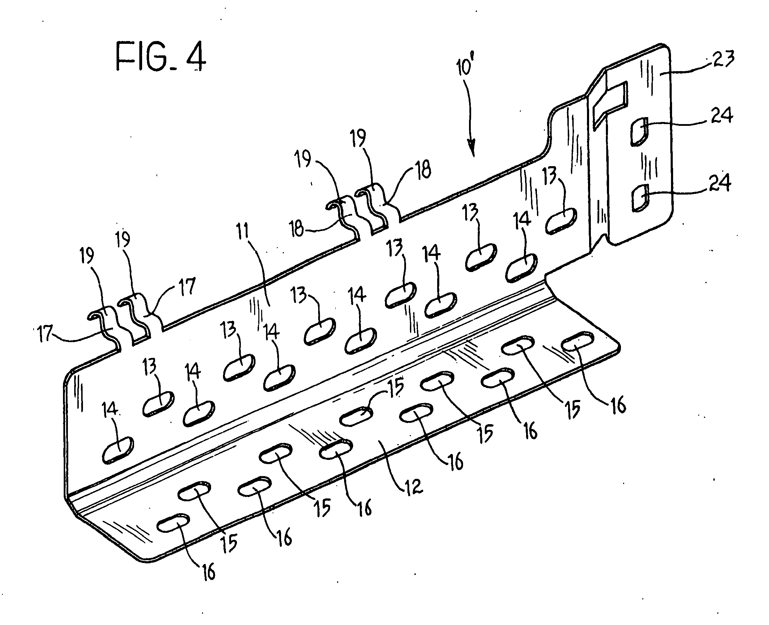

A second preferred embodiment of a joining member according to the present invention is illustrated in Figures 3 and 4 of the appended drawings, in which parts and elements which are identical or equivalent to those of Figures 1 and 2 have been given the same reference numbers.

As shown in Figure 3, a pair of joining members 10' connect a first mesh cable tray element 1 to a second channel-like cable duct element 102, such as an angle connector, for example.

Arranged in a conventional configuration for a cable duct, the element 102 comprises a bottom wall 21 and a pair of side walls 22 extending perpendicular to the bottom wall 21 so as to form a channel, the cross-section of which has shape and dimensions substantially the same as those of the mesh tray element 1.

In this case, the joining member 10' has a main portion for engaging the mesh tray element 1 which is substantially identical to the member 10 described above. In fact, this main portion is a longitudinally extending metal sheet element, substantially L-shaped in cross section, comprising
- a vertical plate portion 11, in which there are formed
   a first sequence of apertures 13, advantageously shaped as longitudinal slots, equally spaced in a first longitudinal direction, and
   a second sequence of apertures 14, advantageously shaped as longitudinal slots, equally spaced, preferably by the same distance as the first sequence and staggered with respect to the apertures 13 in a second longitudinal direction, spaced vertically from the first, and
- a horizontal, flat plate portion 12, preferably formed integrally with the first, in which there are formed
   a third sequence of apertures 15, advantageously shaped as longitudinal slots, equally spaced in a third longitudinal direction, and
   a fourth sequence of apertures 16, advantageously shaped as longitudinal slots, equally spaced, preferably by the same distance as the first sequence and staggered with respect to the apertures 15 in a fourth longitudinal direction, transversely spaced from the third.

The apertures 13 and/or 14 in the vertical plate portion 11 enable screws to be inserted for securing the aforesaid main portion of the joining member 10' to a vertical arm 7 of at least one transverse wire (typically the second wire 5b) and/or to a longitudinal wire 3b of the mesh tray element 1. The apertures 15 and/or 16 in the horizontal plate portion 12, on the other hand, enable the member 10' to be secured to the bottom portion 6 of the aforesaid transverse wire 5b and/or to one of the bottom longitudinal wires 3c of the element 1.

As in the first embodiment discussed above, there are provided first and second pairs of projections 17 and 18 extending from the upper edge of the vertical plate portion 12, spaced longitudinally and with their upper portions forming hooks 19 for engaging, by snap-engaging for example, the edge longitudinal wires 3a of the mesh tray element 1.

On the side facing the second channel element 102, the joining member 10' comprises a further vertical plate portion 23, with a pair of apertures 24 formed therein so as to be aligned in use with corresponding apertures 25 in the side walls 22 of the element 102, in order to secure this latter to the joining member 10', by screws (not shown) for example, and thus to the first mesh tray element 1. The plate portion 23, which is parallel to the vertical plate portion 11, is preferably formed integrally therewith, although it may be transversely spaced from the portion 11 in order to accommodate the width of the channel 102.

The joining member 10' enables to connect a mesh cable tray element to a channel-like cable duct element quickly and easily, thereby providing an operator assembling a cable tray with the greatest possible choice among the types of elements to use.

Naturally, the principle of the invention remaining unchanged, embodiments and manufacturing details may vary widely from those described and illustrated purely by way of non-limitative example.

## Claims

1. A joining member (10) for connecting a first mesh cable tray element (1) to a second, longitudinally adjacent mesh cable tray element (2); the said first and second mesh tray elements (1, 2) each comprising a series of longitudinal wires (3a, 3b, 3c) and a series of transverse wires (5a, 5b, 5c) joined together in a mesh; the transverse wires (5a, 5b, 5c) including a bottom portion (6) from which two parallel vertical arms (7) extend perpendicular, whereby each transverse wire is generally U-shaped; the said series of longitudinal wires comprising side longitudinal wires (3a, 3b) connected to the vertical arms (7) of the transverse wires (5a, 5b, 5c) and bottom longitudinal wires (3c) connected to the bottom portions (6) of the transverse wires (5a, 5b, 5c);
**characterised in that** it comprises
a first plate portion (11) with a first plurality of apertures (13, 14) formed therein for fixing the said first portion to the vertical arms (7) of the transverse wires (5a, 5b, 5c) and/or to the side longitudinal wires (3b) of the two mesh tray elements (1, 2) to be connected; and
a second plate portion (12), substantially perpendicular to the first portion (11), wherein in the second portion (12) are formed a second plurality of apertures (15, 16) for fixing the said second portion to the bottom portions (6) of the transverse wires (5a, 5b, 5c) and/or to the bottom longitudinal wires (3c) of the two mesh tray elements (1, 2) to be connected.

2. A joining member (10') for connecting a first mesh cable tray element (1) to a second, longitudinally adjacent channel-like cable duct element (102); the said first mesh tray element (1) including a series of longitudinal wires (3a, 3b, 3c) and a series of transverse wires (5a, 5b, 5c) joined together in a mesh; the transverse wires (5a, 5b, 5c) including a bottom portion (6) from which two parallel vertical arms (7) extend perpendicular, whereby each transverse wire is generally U-shaped; the said series of longitudinal wires comprising side longitudinal wires (3a, 3b) connected to the vertical arms (7) of the transverse wires (5a, 5b, 5c) and bottom longitudinal wires (3c) connected to the bottom portions (6) of the transverse wires (5a, 5b, 5c); the second channel-like duct element (102) comprising a bottom wall (21) and a pair of side walls (22) extending perpendicular to the bottom wall (21) so as to form a channel;
**characterised in that** it comprises
a first plate portion (11) with a first plurality of apertures (13, 14) formed therein for fixing the said first portion to the vertical arms (7) of the transverse wires (5a, 5b, 5c) and/or to the side longitudinal wires (3b) of the first mesh tray element (1);
a second plate portion (12), substantially perpendicular to the first portion (11), wherein in the second portion (12) are formed a second plurality of apertures (15, 16) for fixing the said second portion to the bottom portions (6) of the transverse wires (5a, 5b, 5c) and/or to the bottom longitudinal wires (3c) of the first mesh tray element (1); and
a third plate portion (23) substantially parallel to the first portion (11), wherein in the third portion (23) are formed at least a pair of apertures (24) for fixing the said third portion to the side walls (22) of the second, channel-like duct element (102).

3. A joining member according to Claim 1 or Claim 2, **characterised in that** the said first plurality of apertures in the first plate portion (11) comprises longitudinal slots (13, 14).

4. A joining member according to any preceding Claim, **characterised in that** the said second plurality of apertures in the second plate portion (12) comprises longitudinal slots (15, 16).

5. A joining member according to any preceding Claim, **characterised in that** the said first plurality of apertures in the first plate portion (11) comprises a first sequence of apertures (13) in a substantially longitudinal direction and a second sequence of apertures (14) in a second, substantially longitudinal direction, the said second direction being spaced vertically from the first one.

6. A joining member according to any preceding Claim, **characterised in that** the said second plurality of apertures in the second plate portion (12) includes a third sequence of apertures (15) in a third, substantially longitudinal direction, and a fourth sequence of apertures (16) in a fourth, substantially longitudinal direction, the said fourth direction being spaced transversely from the third one.

7. A joining member according to Claim 5, **characterised in that** the said first sequence of apertures (13) in the first plate portion (11) comprises apertures of substantially identical shape and size, equidistantly spaced along the said first longitudinal direction.

8. A joining member according to Claim 5, **characterised in that** the said second sequence of apertures (14) in the first plate portion (11) comprises apertures of substantially identical shape and size, equally spaced along the said second longitudinal direction.

9. A joining member according to Claims 7 and 8, **characterised in that** the apertures (13) of the said first sequence are staggered longitudinally with respect to the apertures (14) of the said second sequence.

10. A joining member according to Claims 6, **characterised in that** the said third sequence of apertures (15) in the second plate portion (12) comprises apertures of substantially identical shape and size, equally spaced along the said third longitudinal direction.

11. A joining member according to Claim 6, **characterised in that** the said fourth sequence of apertures (16) in the second plate portion (12) comprises apertures of substantially identical shape and size, equally spaced along the said fourth longitudinal direction.

12. A joining member according to Claims 10 and 11, **characterised in that** the apertures (15) of the said third sequence are staggered longitudinally with respect to the apertures (16) of the said fourth sequence.

13. A joining member according to Claims 5 and 6, **characterised in that** the apertures (15) of the said third sequence of apertures in the second plate portion (12) are substantially identical to and longitudinally aligned with the apertures (13) of the said first sequence of apertures in the said first plate portion (11).

14. A joining member according to Claims 5 and 6, **characterised in that** the apertures (16) of the said fourth sequence of apertures in the second plate portion (12) are substantially identical to and longitudinally aligned with the apertures (14) of the said second sequence of apertures in the first plate portion (11).

15. A joining member according to any of Claims 3 to 14 when depending on Claim 1, **characterised in that** the said first plate portion (11) comprises hooks (19) for engaging at least one side longitudinal wire (3a, 3b) of at least one of the two mesh tray elements (1,2), so as to hold the joining member (10) in place during assembly.

16. A joining member according to any of Claims 2 to 14, **characterised in that** the said first plate portion (11) comprises hooks (19) for engaging at least one side longitudinal wire (3a, 3b) of the first mesh tray element (1) so as to hold the joining member (10') in place during assembly.

## Patentansprüche

1. Verbindungselement (10) zum Verbinden eines ersten Gitterkabeltrassenelements (1) mit einem zweiten, in Längsrichtung verlaufenden, benachbarten Gitterkabeltrassenelement (2); wobei das erste und das zweite Gittertrassenelement (1, 2) jeweils eine Anzahl von Längsdrähten (3a, 3b, 3c) und eine Anzahl von Querdrähten (5a, 5b, 5c) umfassen, die in einem Gitter zusammen gefügt sind; wobei die Querdrähte (5a, 5b, 5c) einen unteren Abschnitt (6) umfassen, von dem sich zwei parallele, vertikale Arme (7) orthogonal erstrecken, wodurch jeder Querdraht im Allgemeinen U-förmig ist; wobei die Anzahl von Längsdrähten mit den vertikalen Armen (7) der Querdrähte (5a, 5b, 5c) verbundene Seitenlängsdrähte (3a, 3b) umfasst und mit den unteren Abschnitten (6) der Querdrähte (5a, 5b, 5c) verbundene untere Längsdrähte (3c) umfasst;
**dadurch gekennzeichnet, dass** es umfasst
einen ersten Plattenabschnitt (11) mit einer ersten Mehrzahl von darin gebildeten Öffnungen (13, 14) zum Befestigen des ersten Abschnitts an den vertikalen Armen (7) der Querdrähte (5a, 5b, 5c) und/oder an den Seitenlängsdrähten (3b) der zwei zu verbindenden Gittertrassenelemente (1, 2); und
einen zweiten Plattenabschnitt (12), im Wesentlichen orthogonal zu dem ersten Abschnitt (11), wobei in dem zweiten Abschnitt (12) eine zweite Mehrzahl von Öffnungen (15, 16) zum Befestigen des zweiten Abschnitts an den unteren Abschnitten (6) der Querdrähte (5a, 5b, 5c) und/oder an den unteren Längsdrähten (3c) der zwei zu verbindenden Gittertrassenelementen (1, 2) gebildet ist.

2. Verbindungselement (10') zum Verbinden eines ersten Gitterkabeltrassenelements (1) mit einem zweiten, in Längsrichtung benachbarten kanalähnlichen Kabelführungselement (102); wobei das erste Gittertrassenelement (1) jeweils eine Anzahl von Längsdrähten (3a, 3b, 3c) und eine Anzahl von Querdrähten (5a, 5b, 5c) umfasst, die in einem Gitter zusammen gefügt sind; wobei die Querdrähte (5a, 5b, 5c) einen unteren Abschnitt (6) umfassen, von dem sich zwei parallele, vertikale Arme (7) orthogonal erstrecken, wodurch jeder Querdraht im Allgemeinen U-förmig ist; wobei die Anzahl von Längsdrähten mit den vertikalen Armen (7) der Querdrähte (5a, 5b, 5c) verbundene Seitenlängsdrähte (3a, 3b) umfasst und mit den unteren Abschnitten (6) der Querdrähte (5a, 5b, 5c) verbundene untere Längsdrähte (3c) umfasst; wobei das zweite kanalähnliche Führungselement (102) eine untere Wand (21) und ein Paar Seitenwände (22) umfasst, die sich orthogonal zu der unteren Wand (21) erstrecken, um einen Kanal zu bilden;
**dadurch gekennzeichnet, dass** es umfasst
einen ersten Plattenabschnitt (11) mit einer ersten Mehrzahl von darin gebildeten Öffnungen (13, 14) zum Befestigen des ersten Abschnitts an den vertikalen Armen (7) der Querdrähte (5a, 5b, 5c) und/oder an den Seitenlängsdrähten (3b) des ersten Gittertrassenelements (1);
einen zweiten Plattenabschnitt (12), im Wesentlichen orthogonal zu dem ersten Abschnitt (11), wobei in dem zweiten Abschnitt (12) eine zweite Mehrzahl von Öffnungen (15, 16) zum Befestigen des zweiten Abschnitts an den unteren Abschnitten (6) der Querdrähte (5a, 5b, 5c) und/oder an den unteren Längsdrähten (3c) des ersten Gittertrassenelements (1) gebildet ist; und
einen dritten Plattenabschnitt (23), der im Wesentlichen parallel zu dem ersten Abschnitt (11) ist, wobei in dem dritten Abschnitt (23) wenigstens ein paar Öffnungen (24) gebildet ist, um den dritten Abschnitt an den Seitenwänden (22) des zweiten, kanalähnlichen Führungselements (102) zu befestigen.

3. Verbindungselement nach Anspruch 1 oder Anspruch 2, **dadurch gekennzeichnet, dass** die erste Mehrzahl von Öffnungen in dem ersten Plattenabschnitt (11) Längsschlitze (13, 14) umfasst.

4. Verbindungselement nach einem der vorangehenden Ansprüche, **dadurch gekennzeichnet, dass** die zweite Mehrzahl von Öffnungen in dem zweiten Plattenabschnitt (12) Längsschlitze (15, 16) umfasst.

5. Verbindungselement nach einem der vorangehenden Ansprüche, **dadurch gekennzeichnet, dass** die erste Mehrzahl von Öffnungen in dem ersten Plattenabschnitt (11) eine erste Folge von Öffnungen (13) im Wesentlichen in Längsrichtung umfasst und eine zweite Folge von Öffnungen (14) in einer zweiten im Wesentlichen Längsrichtung umfasst, wobei die zweite Richtung zu der ersten vertikal beabstandet ist.

6. Verbindungselement nach einem der vorangehenden Ansprüche, **dadurch gekennzeichnet, dass** die zweite Mehrzahl von Öffnungen in dem zweiten Plattenabschnitt (12) eine dritte Folge von Öffnungen (15) in einer dritten im Wesentlichen Längsrichtung umfasst und eine vierte Folge von Öffnungen (16) in einer vierten im Wesentlichen Längsrichtung umfasst, wobei die vierte Richtung zu der dritten quer beabstandet ist.

7. Verbindungselement nach Anspruch 5, **dadurch gekennzeichnet, dass** die erste Folge von Öffnungen (13) in dem ersten Plattenabschnitt (11) Öffnungen von im Wesentlichen identischer Gestalt und Größe umfasst, die gleichmäßig entlang der ersten Längsrichtung beabstandet sind.

8. Verbindungselement nach Anspruch 5, **dadurch gekennzeichnet, dass** die zweite Folge von Öffnungen (14) in dem ersten Plattenabschnitt (11) Öffnungen von im Wesentlichen identischer Gestalt und Größe umfasst, die gleichmäßig entlang der zweiten Längsrichtung beabstandet sind.

9. Verbindungselement nach Anspruch 7 und 8, **dadurch gekennzeichnet, dass** die Öffnungen (13) der ersten Folge bezüglich der Öffnungen (14) der zweiten Folge in Längsrichtung versetzt sind.

10. Verbindungselement nach Anspruch 6, **dadurch gekennzeichnet, dass** die dritte Folge von Öffnungen (15) in dem zweiten Plattenabschnitt (12) Öffnungen von im Wesentlichen identischer Gestalt und Größe umfasst, die gleichmäßig entlang der dritten Längsrichtung beabstandet sind.

11. Verbindungselement nach Anspruch 6, **dadurch gekennzeichnet, dass** die vierte Folge von Öffnungen (16) in dem zweiten Plattenabschnitt (12) Öffnungen von im Wesentlichen identischer Gestalt und Größe umfasst, die gleichmäßig entlang der vierten Längsrichtung beabstandet sind.

12. Verbindungselement nach Anspruch 10 und 11, **dadurch gekennzeichnet, dass** die Öffnungen (15) der dritten Folge bezüglich der Öffnungen (16) der vierten Folge in Längsrichtung versetzt sind.

13. Verbindungselement nach Anspruch 5 und 6, **dadurch gekennzeichnet, dass** die Öffnungen (15) der dritten Folge von Öffnungen in dem zweiten Plattenabschnitt (12) mit den Öffnungen (13) der ersten Folge von Öffnungen in dem ersten Plattenabschnitt (11) im Wesentlichen identisch und in Längsrichtung ausgerichtet sind.

14. Verbindungselement nach Anspruch 5 und 6, **dadurch gekennzeichnet, dass** die Öffnungen (16) der vierten Folge von Öffnungen in dem zweiten Plattenabschnitt (12) mit den Öffnungen (14) der zweiten Folge von Öffnungen in dem ersten Plattenabschnitt (11) im Wesentlichen identisch und in Längsrichtung ausgerichtet sind.

15. Verbindungselement nach Anspruch 3 bis 14, wenn abhängig von Anspruch 1,
**dadurch gekennzeichnet, dass** der erste Plattenabschnitt (11) Haken (19) zum Eingreifen von wenigstens einem Seitenlängsdraht (3a, 3b) wenigstens eines der zwei Gittertrassenelemente (1, 2) umfasst, um das Verbindungselement (10) während des Zusammenfügens an Ort und Stelle zu halten.

16. Verbindungselement nach einem der Ansprüche 2 bis 14, **dadurch gekennzeichnet, dass** der erste Plattenabschnitt (11) Haken (19) zum Eingreifen von wenigstens einem Seitenlängsdraht (3a, 3b) des ersten Gittertrassenelements (1) umfasst, um das Verbindungselement (10') während des Zusammenfügens an Ort und Stelle zu halten.

## Revendications

1. Elément de jonction (10) destiné à relier un premier élément de chemin de câbles en maillage (1) à un deuxième élément de chemin de câbles en maillage (2) adjacent longitudinalement, lesdits premier et deuxième éléments de chemin de câbles en maillage (1, 2) comprenant chacun une série de fils longitudinaux (3a, 3b, 3c) et une série de fils transversaux (5a, 5b, 5c) reliés ensemble en un maillage, les fils transversaux (5a, 5b, 5c) comprenant une partie inférieure (6) à partir de laquelle deux bras verticaux parallèles (7) s'étendent perpendiculairement, grâce à quoi chaque fil transversal est globalement en forme de U, lesdites séries de fils longitudinaux comprenant des fils longitudinaux latéraux (3a, 3b) reliés aux bras verticaux (7) des fils transversaux (5a, 5b, 5c) et des fils longitudinaux inférieurs (3c) reliés aux parties inférieures (6) des fils transversaux (5a, 5b, 5c),
**caractérisé en ce qu'**il comprend
une première partie de plaque (11) comportant une première pluralité d'ouvertures (13, 14) formées dans celle-ci pour fixer ladite première partie aux bras verticaux (7) des fils transversaux (5a, 5b, 5c) et/ou aux fils longitudinaux latéraux (3b) des deux éléments de chemin de câbles en maillage (1, 2) devant être reliés, et
une deuxième partie de plaque (12), sensiblement perpendiculaire à la première partie (11), où dans la deuxième partie (12) sont formées une deuxième pluralité d'ouvertures (15, 16) destinées à fixer ladite deuxième partie aux parties inférieures (6) des fils transversaux (5a, 5b, 5c) et/ou aux fils longitudinaux inférieurs (3c) des deux éléments de chemin de câbles en maillage (1, 2) devant être reliés.

2. Elément de jonction (10') destiné à relier un premier élément de chemin de câbles en maillage (1) à un deuxième élément de conduit de câbles du type canal (102) adjacent longitudinalement, ledit premier élément de chemin de câbles en maillage (1) comprenant une série de fils longitudinaux (3a, 3b, 3c) et une série de fils transversaux (5a, 5b, 5c) reliés ensemble en un maillage, les fils transversaux (5a, 5b, 5c) comprenant une partie inférieure (6) à partir de laquelle deux bras verticaux parallèles (7) s'étendent perpendiculairement, grâce à quoi chaque fil transversal est généralement en forme de U, lesdites séries de fils longitudinaux comprenant des fils longitudinaux latéraux (3a, 3b) reliés aux bras verticaux (7) des fils transversaux (5a, 5b, 5c) et des fils longitudinaux inférieurs (3c) reliés aux parties inférieures (6) des fils transversaux (5a, 5b, 5c), le deuxième élément de conduit du type canal (102) comprenant une paroi inférieure (21) et une paire de parois latérales (22) s'étendant perpendiculairement à la paroi inférieure (21) de façon à former un canal,
**caractérisé en ce qu'**il comprend
une première partie de plaque (11) ayant une première pluralité d'ouvertures (13, 14) formées dans celle-ci pour fixer ladite première partie aux bras verticaux (7) des fils transversaux (5a, 5b, 5c) et/ou aux fils longitudinaux latéraux (3b) du premier élément de chemin de câbles en maillage (1),
une deuxième partie de plaque (12) sensiblement perpendiculaire à la première partie (11), où dans la deuxième partie (12) sont formées une deuxième pluralité d'ouvertures (15, 16) destinées à fixer ladite deuxième partie aux parties inférieures (6) des fils transversaux (5a, 5b, 5c) et/ou aux fils longitudinaux inférieurs (3c) du premier élément de chemin de câbles en maillage (1), et
une troisième partie de plaque (23) sensiblement parallèle à la première partie (11), où dans la troisième partie (23) sont formées au moins une paire d'ouvertures (24) destinées à fixer ladite troisième partie aux parois latérales (22) du deuxième élément de conduit de type canal (102).

3. Elément de jonction selon la revendication 1 ou la revendication 2, **caractérisé en ce que** ladite première pluralité d'ouvertures dans la première partie de plaque (11) comprend des fentes longitudinales (13, 14).

4. Elément de jonction selon l'une quelconque des revendications précédentes, **caractérisé en ce que** ladite deuxième pluralité d'ouvertures dans la deuxième partie de plaque (12) comprend des fentes longitudinales (15, 16).

5. Elément de jonction selon l'une quelconque des revendications précédentes, **caractérisé en ce que** ladite première pluralité d'ouvertures dans la première partie de plaque (11) comprend une première succession d'ouvertures (13) dans une direction sensiblement longitudinale et une deuxième succession d'ouvertures (14) dans une deuxième direction sensiblement longitudinale, ladite deuxième direction étant espacée verticalement de la première direction.

6. Elément de jonction selon l'une quelconque des revendications précédentes, **caractérisé en ce que** ladite deuxième pluralité d'ouvertures dans la deuxième partie de plaque (12) comprend une troisième succession d'ouvertures (15) dans une troisième direction sensiblement longitudinale et une quatrième succession d'ouvertures (16) dans une quatrième direction sensiblement longitudinale, ladite quatrième direction étant espacée transversalement de la troisième direction.

7. Elément de jonction selon la revendication 5, **caractérisé en ce que** ladite première succession d'ouvertures (13) dans la première partie de plaque (11) comprend des ouvertures de forme et de taille sensiblement identiques, espacées de manière équidistante le long de ladite première direction longitudinale.

8. Elément de jonction selon la revendication 5, **caractérisé en ce que** ladite deuxième succession d'ouvertures (14) dans la première partie de plaque (11) comprend des ouvertures de forme et de taille sensiblement identiques, espacées également le long de ladite deuxième direction longitudinale.

9. Elément de jonction selon les revendications 7 et 8, **caractérisé en ce que** les ouvertures (13) de ladite première succession sont disposées en quinconce longitudinalement par rapport aux ouvertures (14) de ladite deuxième succession.

10. Elément de jonction selon la revendication 6, **caractérisé en ce que** ladite troisième succession d'ouvertures (15) dans la deuxième partie de plaque (12) comprend des ouvertures de forme et de taille sensiblement identiques, espacées également le long de ladite troisième direction longitudinale.

11. Elément de jonction selon la revendication 6, **caractérisé en ce que** ladite quatrième succession d'ouvertures (16) dans la deuxième partie de plaque (12) comprend des ouvertures de forme et de taille sensiblement identiques, espacées également le long de ladite quatrième direction longitudinale.

12. Elément de jonction selon les revendications 10 et 11, **caractérisé en ce que** les ouvertures (15) de ladite troisième succession sont disposées en quinconce longitudinalement par rapport aux ouvertures (16) de ladite quatrième succession.

13. Elément de jonction selon les revendications 5 et 6, **caractérisé en ce que** les ouvertures (15) de ladite troisième succession d'ouvertures dans la deuxième partie de plaque (12) sont sensiblement identiques aux ouvertures (13) de ladite première succession d'ouvertures dans ladite première partie de plaque (11) et longitudinalement alignées avec celles-ci.

14. Elément de jonction selon les revendications 5 et 6, **caractérisé en ce que** les ouvertures (16) de ladite quatrième succession d'ouvertures dans la deuxième partie de plaque (12) sont sensiblement identiques aux ouvertures (14) de ladite deuxième succession d'ouvertures dans la première partie de plaque (11) et longitudinalement alignées avec celles-ci.

15. Elément de jonction selon l'une quelconque des revendications 3 à 14, lorsqu'elles dépendent de la revendication 1, **caractérisé en ce que** ladite première partie de plaque (11) comprend des crochets (19) pour un engagement avec au moins un fil longitudinal latéral (3a, 3b) d'au moins un des deux éléments de chemin de câbles en maillage (1, 2) de façon à maintenir l'élément de jonction (10) en place au cours d'un assemblage.

16. Elément de jonction selon l'une quelconque des revendications 2 à 14, **caractérisé en ce que** ladite première partie de plaque (11) comprend des crochets (19) pour un engagement avec au moins un fil longitudinal latéral (3a, 3b) du premier élément de chemin de câbles en maillage (1) de façon à maintenir l'élément de jonction (10') en place au cours d'un assemblage.
